# EUROPEAN PATENT APPLICATION

(11) **EP 4 692 531 A1**
(43) Date of publication of application: **11.02.2026**
(21) Application number: 23930166.6
(22) Date of filing: 31.03.2023
(51) Int. Cl.: F02D 41/06, B60W 10/06, B60W 20/15, F02D 29/06, F02D 41/34

(54) **WARM-UP CONTROL METHOD AND DEVICE FOR INTERNAL COMBUSTION ENGINE OF HYBRID VEHICLE**

(71) Applicant: NISSAN MOTOR Co., Ltd., Yokohama-shi, Kanagawa 221-0023 (JP); RENAULT S.A.S., 92100 Boulogne-Billancourt (FR)
(72) Inventor: TAKAHASHI, Katsuhito, Atsugi-shi, Kanagawa 243--0123 (JP); UCHIDA, Ryo, Atsugi-shi, Kanagawa 243--0123 (JP); IKEHARA, Kensuke, Atsugi-shi, Kanagawa 243--0123 (JP); TSUCHIDA, Hirofumi, Atsugi-shi, Kanagawa 243--0123 (JP)
(74) Representative: Hoefer & Partner Patentanwälte mbB
(86) International application number: PCT/IB2023/000160
(87) International publication number: WO 2024/201092

(57) **Abstract**

A series hybrid vehicle is provided with an internal combustion engine (2) that drives a generator (1). The internal combustion engine (2) is operated in a catalyst warm-up mode after a cold start. When the cooling water temperature reaches a first temperature (TW1), the operation mode transitions to an emission-priority warm-up mode. In the emission-priority warm-up mode, the load is limited to a load lower than the best fuel economy point, and the injection timing is controlled so as not to overlap with an intake stroke. At a second temperature (TW2), the operation mode transitions to a fuel economy-priority warm-up mode, and operation is performed at a load that is the best fuel economy point. The injection timing is controlled such that an injection end timing is in the vicinity of the intake top dead center. When the cooling water temperature reaches a third temperature (TW3), the operation mode transitions to a normal operation mode.

## Description

### TECHNICAL FIELD

The present invention relates to warm-up control of an internal combustion engine used to drive a generator in a hybrid vehicle that travels by motor output.

### BACKGROUND TECHNOLOGY

A patent document 1 discloses that, in a hybrid vehicle capable of outputting both the power of an internal combustion engine and the power of a motor to a drive shaft of a vehicle, emissions are reduced by limiting the load on the internal combustion engine during a catalyst warm-up operation after cold engine start.

However, in this method of limiting the load on the internal combustion engine to reduce emissions in this way, the internal combustion engine is operated at an inefficient operation point, resulting in poor fuel economy.

### PRIOR ART DOCUMENT(S)

### PATENT DOCUMENT(S)

Patent Document 1: Japanese Patent Application Publication No. 2005-320911

### SUMMARY OF THE INVENTION

This invention relates to a warm-up control method for an internal combustion engine of a hybrid vehicle that travels by motor output, wherein the internal combustion engine is used to drive a generator, and is a spark-ignition internal combustion engine provided with a port injection-type fuel injection device and a throttle valve, the warm-up control method comprising: providing an emission-priority warm-up mode executed when an engine temperature is relatively low during a period from completion of catalyst warm-up to completion of warm-up of the internal combustion engine, and a fuel economy-priority warm-up mode executed when the engine temperature is relatively high, wherein, in the emission-priority warm-up mode, a fuel injection timing is controlled to an exhaust stroke injection in which an injection end timing does not overlap with an intake stroke, and a load of the internal combustion engine is limited, and wherein, in the fuel economy-priority warm-up mode, the fuel injection timing is controlled to an intake stroke injection in which the injection end timing is in a vicinity of an intake top dead center, and the limitation of the load of the internal combustion engine is not performed.

When the internal combustion engine is at low temperatures, the emission of particulate matter (PM) in the exhaust gas is a major problem, and in recent years, there has been a trend toward regulating the number of emitted particulate matter by so-called PN regulations in the laws of various countries. During the relatively engine low-temperature stage between catalyst warm-up completion and the warm-up completion of the internal combustion engine, load is limited as an emission-priority warm-up mode, thereby reducing PN. In addition, under such a condition, the adhesion of fuel liquid film to the cylinder bore wall surface becomes a factor increasing PN, and the fuel injection timing is set to an exhaust stroke injection in which an injection end timing does not overlap with an intake stroke, thereby suppressing an increase in PN.

On the other hand, in the stage where the temperature of the internal combustion engine is relatively high but the engine warm-up is not complete, a characteristic is observed in which PN is minimized when the injection end timing is in the vicinity of the intake top dead center. Therefore, by controlling the injection timing such that the injection end timing is in the vicinity of the intake top dead center, it is possible to increase load while suppressing an increase in PN. Consequently, an improvement in the fuel economy of the internal combustion engine is achieved.

### BRIEF DESCRIPTION OF THE DRAWINGS

FIG. 1 is an explanatory diagram of the configuration of a series hybrid vehicle.
FIG. 2 is an explanatory diagram showing four operation modes in one embodiment using cooling water temperature and load as parameters.
FIG. 3 is a flowchart showing the flow of the processing of warm-up control in one embodiment.
FIG. 4 is a time chart showing changes in operation modes after cold start.
FIG. 5 is a characteristic diagram showing the relationship between injection end timing and PN under a temperature condition of an emission-priority warm-up mode.
FIG. 6 is a characteristic diagram showing the relationship between injection end timing and PN under a temperature condition of a fuel economy-priority warm-up mode.

### MODE FOR IMPLEMENTING THE INVENTION

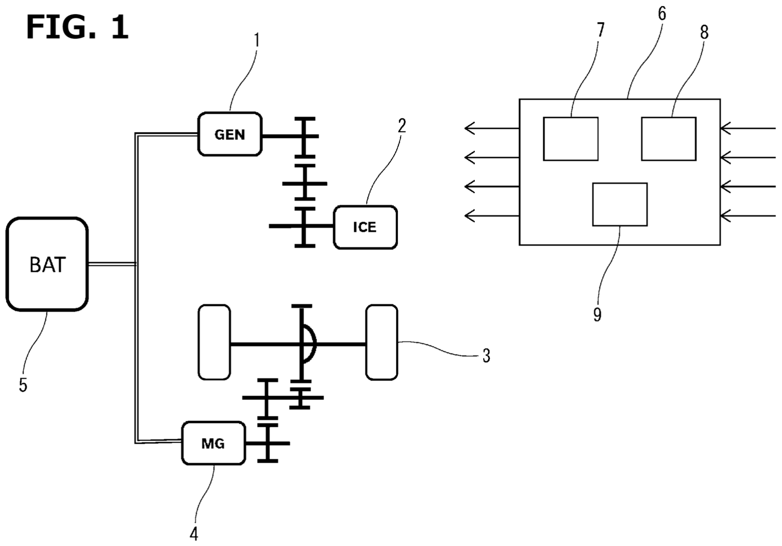

In the following, one embodiment of the present invention will be explained in detail based on the drawings. First, a series hybrid vehicle in which an internal combustion engine of the present invention is used will be explained. FIG. 1 schematically shows the configuration of a series hybrid vehicle in one embodiment. The series hybrid vehicle includes a motor generator 1 for electric power generation that mainly functions as a generator, an internal combustion engine 2 that serves as an internal combustion engine for electric power generation to drive the electric power generator motor generator 1 according to electric power request, a motor generator 4 for traveling that mainly functions as a motor to drive drive wheels 3, and a battery 5 for storing the generated electric power. The electric power generated by the internal combustion engine 2 driving the electric power generation motor generator 1 is stored in the battery 5 via an inverter device (not shown). The traveling motor generator 4 is driven and controlled using the electric power from the battery 5. The electric power generated during regeneration of the traveling motor generator 4 is also stored in the battery 5 via an inverter device (not shown).

The operation of the motor generators 1 and 4, the charging and discharging of the battery 5, and the operation of the internal combustion engine 2 are controlled by a controller 6. The controller 6 is composed of a plurality of controllers connected to each other in a manner that allows communication, such as a motor controller 7 for controlling the motor generators 1 and 4, an engine controller 8 for controlling the internal combustion engine 2, and a battery controller 9 for managing the battery 5. The controller 6 receives input information of the opening angle of the accelerator pedal (not shown), vehicle speed, and the like. In addition, the battery controller 9 obtains an SOC of the battery 5 based on the voltage and current of the battery 5. When the SOC decreases to a predetermined lower limit level, the internal combustion engine 2 is started via the engine controller 8 to generate electric power. The engine controller 8 is connected with various sensors (for example, airflow meter, crank angle sensor, water temperature sensor, exhaust sensor) that are generally required for controlling the internal combustion engine 2. In such a series hybrid vehicle, there are two driving modes: EV mode in which the vehicle travels using only the electric power from the battery 5 without combustion operation of the internal combustion engine 2, and HEV mode in which the vehicle travels while performing electric power generation by the combustion of the internal combustion engine 2.

The internal combustion engine 2 is a four-stroke cycle spark-ignition internal combustion engine, commonly known as a gasoline engine, equipped with a throttle valve whose opening degree is controlled by the engine controller 8. This internal combustion engine 2 is equipped with a port injection-type fuel injection device that injects fuel into the intake ports of each cylinder, and the fuel injection amount (in other words, injection period) and injection timing are controlled by the engine controller 8. In addition, a catalyst device using a three-way catalyst for exhaust purification is provided in an exhaust passage.

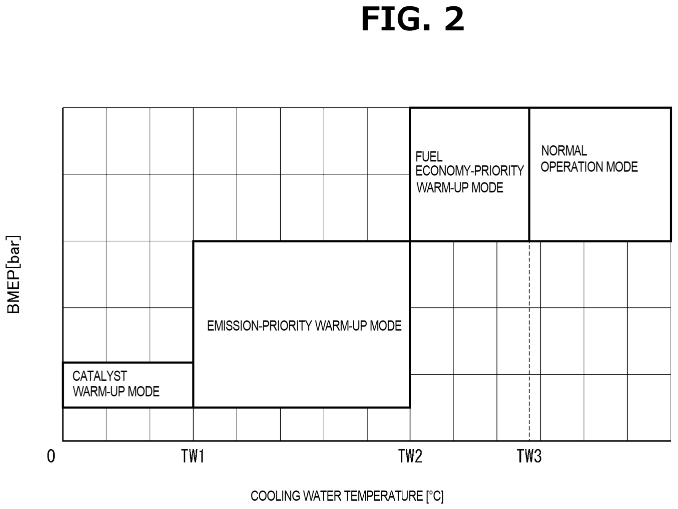

In the internal combustion engine 2 that performs electric power generation by driving the motor generator 1 in this way, a predetermined warm-up control is performed when an electric power generation request (or a start-up request based on other conditions) is made first after the trip of the vehicle starts. FIG. 2 is an explanatory diagram schematically showing changes in operation modes in warm-up control after cold start, with the horizontal axis showing cooling water temperature as engine temperature and the vertical axis showing BMEP (break mean effective pressure) corresponding to load. After cold start, the internal combustion engine 2 is operated in a catalyst warm-up mode until the cooling water temperature reaches a first cooling water temperature TW1. In the catalyst warm-up mode, the load is limited to a low level, and exhaust temperature is increased by ignition timing retard.

When the cooling water temperature reaches the first cooling water temperature TW1, the operation mode transitions from the catalyst warm-up mode to an emission-priority warm-up mode. In the emission-priority warm-up mode, although the load upper limit is higher than that in the catalyst warm-up mode, load limitation is still performed to reduce particulate matter (PM). At this time, the load upper limit is generally lower than a load corresponding to the best fuel economy point. In the emission-priority warm-up mode, as described later, as a fuel injection timing control, an exhaust stroke injection in which the injection end timing does not overlap with the intake stroke is performed. In the exhaust stroke injection, all or part of the total injection amount is injected during the exhaust stroke (exhaust valve opening period). In addition, in this example, catalyst warm-up is considered complete when the cooling water temperature reaches the first cooling water temperature TW1. However, the catalyst temperature can be estimated based on the integration of the amount of heat input to the catalyst, and the operation mode can be switched from the catalyst warm-up mode to the emission-priority warm-up mode when the estimated catalyst temperature reaches a predetermined value.

When the cooling water temperature reaches a second cooling water temperature TW2 higher than the first cooling water temperature TW1, the operation mode transitions from the emission-priority warm-up mode to a fuel economy-priority warm-up mode. In the fuel economy-priority warm-up mode, the load is not limited, and operation can be performed at the load that is the best fuel economy point. In the fuel economy-priority warm-up mode, the fuel injection timing is controlled such that the injection end timing is in the vicinity of the intake top dead center, as described below. In addition, in this case, only part of the total injection amount is injected during the intake stroke, but for the sake of distinction from the exhaust stroke injection, this is referred to as "intake stroke injection" in the present specification.

When the cooling water temperature reaches a third cooling water temperature TW3, which is even higher, the operation mode transitions from the fuel economy-priority warm-up mode to a normal operation mode. The third cooling water temperature TW3 corresponds to the completion of warm-up of the internal combustion engine 2. In the normal operation mode, there is no load limitation, and operation at the load that is the best fuel economy point is possible. In addition, regarding fuel injection timing control, since the temperature of the intake port inner wall surface and the like is sufficiently high, the fuel injection timing is the exhaust stroke injection that is advantageous in terms of fuel properties.

In addition, after once the cooling water temperature reaches the third cooling water temperature TW3 and the operation mode transitions to the normal operation mode, the internal combustion engine 2 is started and operated appropriately to maintain this cooling water temperature (in other words, to suppress the cooling water temperature from decreasing).

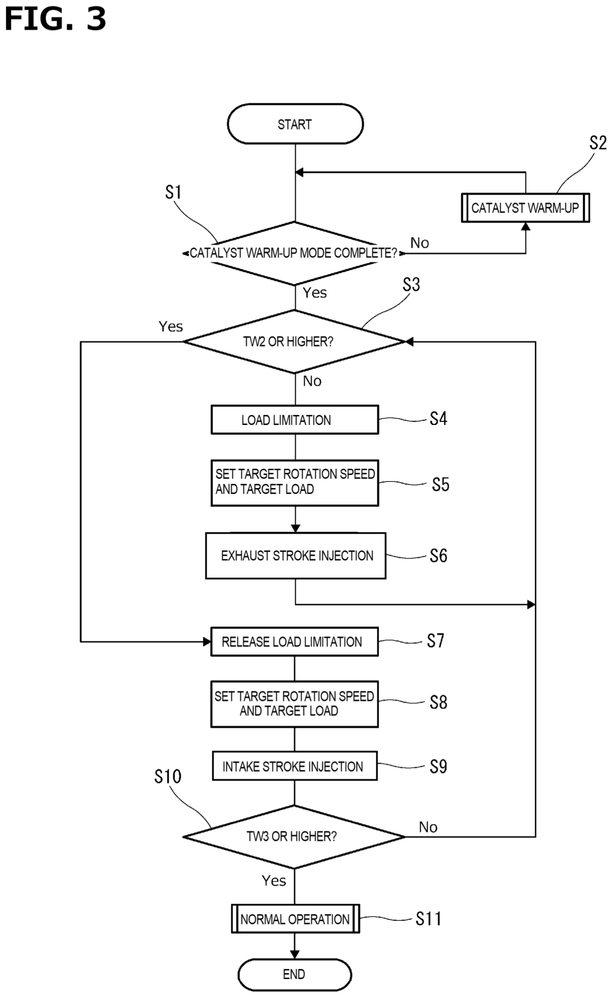

Next, FIG. 3 is a flowchart showing the flow of processing of the warm-up control executed by the engine controller 8. First, in a step 1, it is determined whether the catalyst warm-up is completed, and until the catalyst warm-up is completed, operation is performed in the catalyst warm-up mode in a step 2. When the catalyst warm-up is completed, the process proceeds to a step 3, and it is determined whether the cooling water temperature is equal to or higher than the second cooling water temperature TW2. When the determination in the step 3 is NO, the process proceeds to a step 4, and the load limitation is performed as the emission-priority warm-up mode. Then, under this load limitation, a target rotation speed and a target load for the internal combustion engine 2 are set (step 5), and the fuel injection timing is set to the exhaust stroke injection (step 6). That is, the fuel injection start timing is controlled in accordance with the fuel injection amount such that the injection end timing is at an appropriate crank angle during the exhaust stroke as a target. With this, operation in the emission-priority warm-up mode is continued until the cooling water temperature reaches the second cooling water temperature TW2.

When the cooling water temperature reaches the second cooling water temperature TW2, the process proceeds from the step 3 to a step 7, and the load limitation is released. Then, a target rotation speed and a target load of the internal combustion engine 2 are set to achieve the best fuel economy (step 8), and the fuel injection timing is controlled to the intake stroke injection (step 9). In detail, the fuel injection start timing is controlled in accordance with the fuel injection amount such that the fuel injection end timing is in the vicinity of the target intake top dead center.

In a step 10, it is determined whether the cooling water temperature reaches the third cooling water temperature TW3 corresponding to the warm-up completion of the internal combustion engine 2. Until the cooling water temperature reaches the third cooling water temperature TW3, the fuel economy-priority warm-up mode of the steps 7 to 9 is continued. When the cooling water temperature reaches the third cooling water temperature TW3, the process proceeds to a step 11, and the operation mode transitions to the normal operation mode.

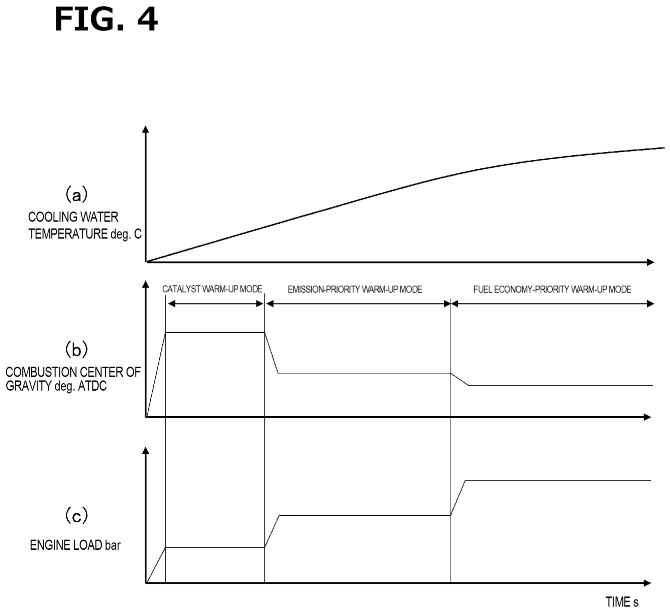

FIG. 4 shows the changes in (a) cooling water temperature, (b) combustion center of gravity, and (c) internal combustion engine load after cold start. As shown in FIG. 4, although the cooling water temperature gradually rises, until the cooling water temperature reaches the first cooling water temperature TW1, the operation mode is in the catalyst warm-up mode, and the load is greatly limited. In addition, a relatively large ignition timing retard is performed, causing the combustion center of gravity to shift toward the retard side. With this, exhaust temperature increases, and the temperature rise of catalyst is promoted. When the cooling water temperature reaches the first cooling water temperature TW1, the operation mode transitions to the emission-priority warm-up mode, and the load is higher than that in the catalyst warm-up mode. However, due to the load limitation, operation is performed at a load lower than that corresponding to the best fuel economy point. The ignition timing retard amount becomes smaller than that in the catalyst warm-up mode, and the combustion center of gravity advances relatively. However, it remains on the delay side compared to the combustion center of gravity corresponding to the MBT point. Then, when the cooling water temperature reaches the second cooling water temperature TW2, the operation mode transitions from the emission-priority warm-up mode to the fuel economy-priority warm-up mode, and the load limitation is released. Furthermore, the ignition timing retard amount becomes even smaller, and the combustion center of gravity approaches the MBT point.

In addition, although not shown in the drawing, when the cooling water temperature reaches the third cooling water temperature TW3, the operation mode transitions to the normal operation mode, and the ignition timing is controlled with the MBT point as the target.

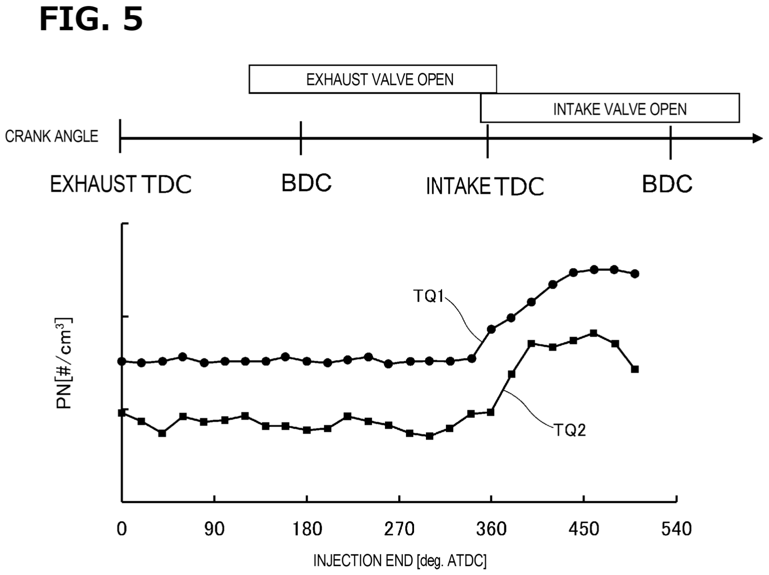

FIG. 5 shows the correlation between the fuel injection end timing and PN in the temperature range (namely, TW1 to TW2) of the emission-priority warm-up mode. Here, the characteristic in the case of a load TQ1 which corresponds to the best fuel economy point of the internal combustion engine 2 is compared with that in the case of a load TQ2 which is limited to be lower than the best fuel economy point. In addition, the throttle valve opening degree differs between the load TQ1 and the load TQ2, and therefore the negative pressure generated on the downstream side of the throttle valve also differs. In the relatively low load TQ2, stronger negative pressure is generated.

As shown in FIG. 5, PN is lower level at the lower load TQ2 than at the load TQ1 in which load is not limited. Under such a low temperature condition, PN is caused by the adhesion of fuel liquid film to the cylinder wall surface. By the lower load, the fuel injection amount is reduced, thereby decreasing the amount of fuel adhering to the cylinder wall as a liquid film. Furthermore, since the negative pressure is stronger in the load TQ2 than in the load TQ1, the vaporization of the fuel adhering as a liquid film is promoted. Therefore, in general, PN in the load TQ2 that has a relatively low load is lower levels than in the load TQ1.

On the other hand, regarding the injection end timing, in both the load TQ1 and load TQ2 cases, the PN level is lower when the fuel injection timing is the exhaust stroke injection in which the injection end timing does not overlap with the intake stroke (intake valve opening period). When the injection end timing is during the intake stroke, the PN level deteriorates significantly. This is because when fuel is injected during the intake valve opening period in a state in which the temperature of the intake port and cylinder wall is low, the amount of fuel adhering to the cylinder wall as a liquid film increases. When fuel injection is ended during the exhaust stroke, vaporization by the negative pressure in the intake port is obtained, and thereby PN level becomes relatively low.

Based on the relationship shown in FIG. 5, during the period when the cooling water temperature is relatively low between the first cooling water temperature TW1 and the second cooling water temperature TW2, as the emission-priority warm-up mode, the load on the internal combustion engine 2 is limited to, for example, the level of the load TQ2, and the fuel injection timing is controlled such that the injection end timing does not overlap with the intake stroke. For example, an appropriate target injection end timing is set, and the injection start timing is controlled according to the required fuel amount (injection period). With this, PN is suppressed to a sufficiently low level while the cooling water temperature is between TW1 and TW2.

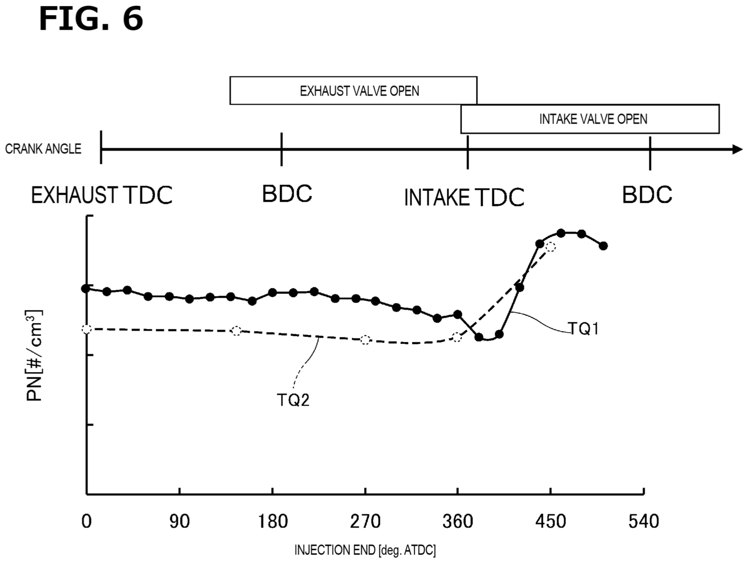

FIG. 6 shows the correlation between the fuel injection end timing and PN in the temperature range (namely, TW2 to TW3) of the fuel economy-priority warm-up mode. Here, similar to FIG. 5, the characteristic in the case of the load TQ1 corresponding to the best fuel economy point of the internal combustion engine 2 is compared with that in the case of the load TQ2 which is limited to be lower than the best fuel economy point. As shown in FIG. 6, the basic PN level in the load TQ2 which is a relatively low load is lower than that in the load TQ1 which has no load limitation, similar to the low temperature condition in FIG. 5. Furthermore, when the injection end timing is during the intake stroke, the level of PN tends to deteriorate. However, focusing on the relationship between PN and the injection end timing in the case of the load TQ1, a characteristic is observed in which the level of PN decreases when the injection end timing is in the vicinity of the intake top dead center. In particular, the minimum PN point is immediately after the end of the valve overlap period, where the exhaust stroke (exhaust valve opening period) and the intake stroke (intake valve opening period) overlap. Consequently, the PN level in the vicinity of this minimum point can be equivalent to the PN level of the load TQ2 when the load limitation is performed. This is considered to be due to the fuel spray injected into an intake port being atomized by the intake flow at the beginning of intake valve opening.

In addition, at the relatively low load TQ2, the amount of intake air passing through an intake valve is relatively small and the flow velocity is low, and such a minimum point of PN is not observed. At the load TQ2, when the injection end timing overlaps with the intake stroke, the level of PN tends to deteriorate.

Therefore, based on the relationship shown in FIG. 6, during the period when the cooling temperature is relatively high between the second cooling water temperature TW2 and the third cooling water temperature TW3, load limitation is released as the fuel economy-priority warm-up mode, and operation is performed at, for example, the load TQ1, which is the best fuel economy point. Furthermore, the injection end timing is controlled so as to be in the vicinity of the intake top dead center, for example, immediately after the end of the valve overlap period. With this, fuel economy is improved while suppressing PN level deterioration compared to when the load limitation is performed (for example, operation at the load TQ2).

As the above, although one embodiment of the present invention has been explained, the present invention is not limited to the above embodiment and various changes can be made to the embodiment. For example, although, in the above embodiment, mode transitions are performed based on cooling water temperature as engine temperature, it is also possible to estimate cylinder wall temperature based on cooling water temperature, outside air temperature, and engine operating conditions, and perform mode transitions based on this cylinder wall temperature. When the cylinder wall temperature can be estimated with high accuracy, mode transitions can be performed at more appropriate timings. Furthermore, the present invention is not limited to the series hybrid vehicle described above, but can be applied to any hybrid vehicle capable of controlling the output of an internal combustion engine independently of the output requirements for traveling. In addition, the warm-up control described above may be performed multiple times as needed during a vehicle trip.

## Claims

1. A warm-up control method for an internal combustion engine of a hybrid vehicle that travels by motor output, wherein the internal combustion engine is used to drive a generator, and is a spark-ignition internal combustion engine provided with a port injection-type fuel injection device and a throttle valve, the warm-up control method comprising:
providing an emission-priority warm-up mode executed when an engine temperature is relatively low during a period from completion of catalyst warm-up to completion of warm-up of the internal combustion engine, and a fuel economy-priority warm-up mode executed when the engine temperature is relatively high,
wherein, in the emission-priority warm-up mode, a fuel injection timing is controlled to an exhaust stroke injection in which an injection end timing does not overlap with an intake stroke, and a load of the internal combustion engine is limited, and
wherein, in the fuel economy-priority warm-up mode, the fuel injection timing is controlled to an intake stroke injection in which the injection end timing is in a vicinity of an intake top dead center, and the limitation of the load of the internal combustion engine is not performed.

2. The warm-up control method for the internal combustion engine of the hybrid vehicle according to claim 1,
wherein, in the intake stroke injection in the fuel economy-priority warm-up mode, the injection end timing is immediately after an end of a valve overlap period.

3. The warm-up control method for the internal combustion engine of the hybrid vehicle according to claim 1,
wherein, in the emission-priority warm-up mode, the internal combustion engine is operated at a load lower than that corresponding to a best fuel economy point, and
wherein, in the fuel economy-priority warm-up mode, the internal combustion engine is operated at the load corresponding to the best fuel economy point.

4. The warm-up control method for the internal combustion engine of the hybrid vehicle according to claim 1,
wherein, after a cold start, when the engine temperature reaches a first temperature, an operation mode transitions from a catalyst warm-up mode to the emission-priority warm-up mode, after that, when the engine temperature reaches a second temperature, the operation mode transitions from the emission-priority warm-up mode to the fuel economy-priority warm-up mode, and after that, when the engine temperature reaches a third temperature, the operation mode transitions from the fuel economy-priority warm-up mode to a normal operation mode.

5. The warm-up control method for the internal combustion engine of the hybrid vehicle according to claim 4,
wherein cooling water temperature is used as the engine temperature.

6. The warm-up control method for the internal combustion engine of the hybrid vehicle according to claim 4,
wherein cylinder wall temperature is estimated, and the estimated cylinder wall temperature is used as the engine temperature.

7. The warm-up control method for the internal combustion engine of the hybrid vehicle according to claim 1,
wherein, in the emission-priority warm-up mode, a combustion center of gravity is controlled to a delay side as compared to the fuel economy-priority warm-up mode.

8. A warm-up control device for an internal combustion engine of a hybrid vehicle that travels by motor output, which comprises the internal combustion engine that is used to drive a generator, and is a spark-ignition internal combustion engine provided with a port injection-type fuel injection device and a throttle valve, the warm-up control device comprising:
a controller configured to control an operation of the internal combustion engine,
wherein the controller is configured to:
have an emission-priority warm-up mode executed when an engine temperature is relatively low during a period from completion of catalyst warm-up to completion of warm-up of the internal combustion engine, and a fuel economy-priority warm-up mode executed when the engine temperature is relatively high,
wherein, in the emission-priority warm-up mode, a fuel injection timing is controlled to an exhaust stroke injection in which an injection end timing does not overlap with an intake stroke, and a load of the internal combustion engine is limited, and
wherein, in the fuel economy-priority warm-up mode, the fuel injection timing is controlled to an intake stroke injection in which the injection end timing is in a vicinity of an intake top dead center, and the limitation of the load of the internal combustion engine is not performed.
